# EUROPEAN PATENT APPLICATION

(11) **EP 4 726 378 A1**
(43) Date of publication of application: **15.04.2026**
(21) Application number: 24822268.9
(22) Date of filing: 26.02.2024
(51) Int. Cl.: G01N 23/046

(54) **INSPECTION DEVICE AND INSPECTION METHOD FOR BATTERY CELL INSPECTION**

(30) Priority: 12.06.2023 CN 202310693090
(71) Applicant: NUCTECH COMPANY LIMITED, Beijing 100084 (CN); Tsinghua University, Haidian District, Beijing 100084 (CN)
(72) Inventor: LI, Yuanjing, Beijing 100084 (CN); CHEN, Zhiqiang, Beijing 100084 (CN); ZHANG, Li, Beijing 100084 (CN); LI, Liang, Beijing 100084 (CN); HONG, Mingzhi, Beijing 100084 (CN); CHANG, Ming, Beijing 100084 (CN); WANG, Zinan, Beijing 100084 (CN)
(74) Representative: Gunzelmann, Rainer
(86) International application number: PCT/CN2024/078531
(87) International publication number: WO 2024/255309

(57) **Abstract**

A detection device and a detection method for detecting a battery cell are provided. The detection device (100) includes a supporting mechanism (10), a rotary mechanism (20), a conveying mechanism (30), and a detection mechanism (40). The rotary mechanism (20) is provided on the supporting mechanism (10), and the rotary mechanism (20) includes a rotary bracket (21) provided on the supporting mechanism (10) and a rotary disk (22) rotatable circumferentially relative to the rotary bracket (21); the conveying mechanism (30) includes two reciprocating conveyor belts (32) respectively provided on two sides of the rotary disk (22), and the reciprocating conveyor belts (32) are configured to carry battery cells (200) to enter or leave a detection region; the detection mechanism (23) is provided on the rotary disk (22), and the detection mechanism (23) includes a radiation source (231) and a detector (232), the radiation source (231) and the detector (232) are configured to detect the battery cells (200) on the conveying mechanism (30), and the radiation source (231) and the detector (232) are rotatable circumferentially on the rotary disk (22).

## Description

This application claims priority to Chinese Patent Application No. 202310693090.6 filed on June 12, 2023, the content of which is incorporated herein by reference in its entirety.

### TECHNICAL FIELD

The present disclosure relates to a field of a non-destructive detection, and in particular to a detection device and a detection method for detecting a battery cell.

### BACKGROUND

With a continuous expansion of the demand for lithium batteries, the market has higher requirements for the quality of lithium batteries. At present, consistency requirements for lithium batteries, especially for power batteries, are becoming increasingly stringent. In some related technologies, traditional industrial CT solutions are used, in which a detector and an optical machine are stationary to scan a battery cell, so that high requirements are placed on a position accuracy and a deformation of an angular position of the battery cell to be detected. During a detection process, due to objective factors such as a position of the battery cell and an angular deformation of the battery cell, it is difficult to improve a detection quality, and a misjudgment rate may be excessively high.

### SUMMARY

According to the embodiments in a first aspect of the present disclosure, a detection device is provided. The detection device includes a supporting mechanism, a rotary mechanism, a conveying mechanism, and a detection mechanism. The rotary mechanism is provided on the supporting mechanism, and the rotary mechanism includes a rotary bracket provided on the supporting mechanism and a rotary disk rotatable circumferentially relative to the rotary bracket; the conveying mechanism includes two reciprocating conveyor belts respectively provided on two sides of the rotary disk, and the reciprocating conveyor belts are configured to carry battery cells to enter or leave a detection region; the detection mechanism is provided on the rotary disk, and the detection mechanism includes a radiation source and a detector, the radiation source and the detector are configured to detect the battery cells on the conveying mechanism, and the radiation source and the detector are rotatable circumferentially on the rotary disk.

In some embodiments, the conveying mechanism further includes a plurality of positioning modules arranged at intervals, and the positioning modules are configured to position the battery cells.

In some embodiments, the rotary mechanism further includes a position sensor configured to detect a position of the battery cell on the conveying mechanism.

In some embodiments, the detection device further includes a selection mechanism, and the selection mechanism includes a first selection module configured to place an undetected battery cell on the reciprocating conveyor belt.

Furthermore, the selection mechanism further includes a second selection module configured to transfer the battery cell to a waste region when the detection mechanism detects that the battery cell is unqualified.

According to the embodiments in a second aspect of the present disclosure, a detection method for detecting a battery cell is provided, which is applicable to detect a battery cell by using a detection device, the detection method includes: placing a battery cell on a conveying mechanism; conveying the battery cell to a detection region by using the conveying mechanism; and detecting the battery cell by using a detection mechanism.

In some embodiments, the battery cell is placed at a predetermined angle when being placed on the conveying mechanism, and the predetermined angle is in a range from 15° to 75°.

In some embodiments, the detection method further includes: before detecting the battery cell by using the detection mechanism, driving, by using a rotary disk, the radiation source and the detector to rotate circumferentially; moving two battery cells to the detection region respectively by using reciprocating conveyor belts on two sides of the detection mechanism; driving, by using the rotary disk, the radiation source and the detector to rotate circumferentially to detect the battery cell; and moving the battery cells out of the detection region by using the two reciprocating conveyor belts.

Furthermore, the detection method further includes: transferring an unqualified battery cell to a waste region by using a selection mechanism.

Additional aspects and advantages of the present disclosure may be partially provided in the following description, or partially become apparent from the following description, or may be understood through practice of the present disclosure.

### BRIEF DESCRIPTION OF THE DRAWINGS

The above and/or additional aspects and advantages of the present disclosure will become apparent and easily understood from the description of the embodiments in conjunction with the following drawings. In the drawings:
FIG. 1 shows a front view of a detection device according to the embodiments in a first aspect of the present disclosure; and
FIG. 2 shows a top cross-sectional view of a detection device according to the embodiments in the first aspect of the present disclosure.

Reference numerals: detection device 100, supporting mechanism 10, rotary mechanism 20, rotary bracket 21, rotary disk 22, detection mechanism 23, radiation source 231, detector 232, rotary connector 24, position sensor 25, conveying mechanism 30, positioning module 31, first positioning portion 311, second positioning portion 312, reciprocating conveyor belt 32, selection mechanism 40, first selection module 41, second selection module 42, battery cell 200.

### DETAILED DESCRIPTION OF EMBODIMENTS

Embodiments of the present disclosure will be described in detail below. Examples of the embodiments are shown in the accompanying drawings, in which the same or similar reference numerals throughout represent the same or similar elements or elements having the same or similar functions. The embodiments described below with reference to the accompanying drawings are exemplary and are just used to explain the present disclosure, and should not be construed as limiting the present disclosure.

In the description of the present disclosure, it should be understood that the terms "center", "longitudinal", "lateral", "length", "width", "thickness", "up", "down", "front", "back", "left", "right", "vertical", "horizontal", "top", "bottom", "inside", "outside", "clockwise", "counterclockwise", "axial", "radial", "circumferential", etc., are used to indicate orientations or positional relationships shown based on the accompanying drawings, which are intended to facilitate the description of the present disclosure and simplify the description, rather than indicate or imply that the device or element referred to must have a specific orientation or must be constructed or operated in a specific orientation, and therefore should not be construed as limiting the present disclosure. In addition, features defined with "first" or "second" may explicitly or implicitly include one or more such features. In the description of the present disclosure, unless otherwise specified, "a plurality of" means two or more.

In the description of the present disclosure, it should be noted that unless otherwise expressly specified and limited, the terms "installed", "interconnected" and "connected" should be understood in a broad sense. For example, it may indicate a fixed connection, a detachable connection, or an integral connection; it may indicate a mechanical connection or an electrical connection; and it may indicate a direct connection, an indirect connection through an intermediate medium, or an internal communication of two elements. For those of ordinary skilled in the art, the specific meanings of the above terms in the present disclosure may be understood according to actual situations.

The present disclosure provides a detection device, which may improve a detection quality and a detection efficiency while reducing placement requirements for a battery cell.

In a detection device according to the embodiments in a first aspect of the present disclosure, a rotary mechanism is provided on a supporting mechanism, a detection mechanism is provided on the rotary mechanism, and the detection mechanism may rotate circumferentially on the rotary mechanism. A conveying mechanism may respectively convey two battery cells to a detection region, and the two battery cells are respectively located on two sides of a rotary disk. When the detection device detects a battery cell, a radiation source and a detector of the detection mechanism may rotate circumferentially on the rotary disk to detect the battery cells located on two sides of the rotary disk simultaneously, thereby improving the detection efficiency. Through a circumferential rotation on the rotary mechanism, the detection mechanism may perform a multi-directional detection on the battery cell, so as to detect alignment and welding of pole pieces of each battery cell, without requirements for a placement position and a placement angle of the battery cell on the conveying mechanism. Therefore, the detection device may improve the detection quality and the detection efficiency while reducing the placement requirements for the battery cell.

The present disclosure is further intended to provide a detection method for detecting a battery cell, which may detect a battery cell by using the above-mentioned detection device.

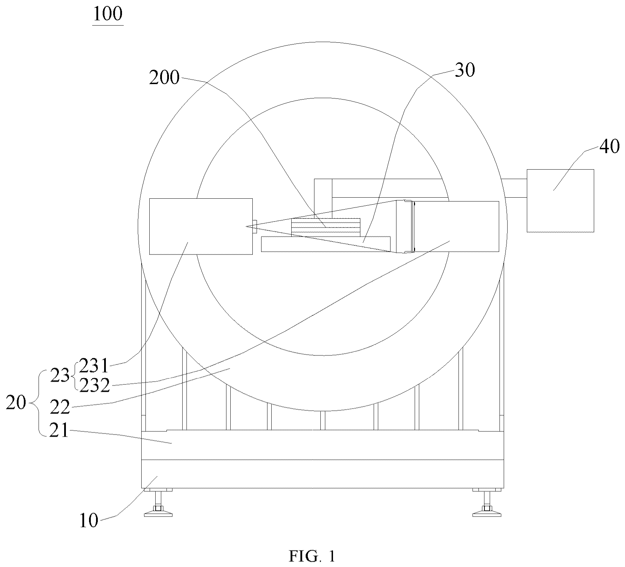

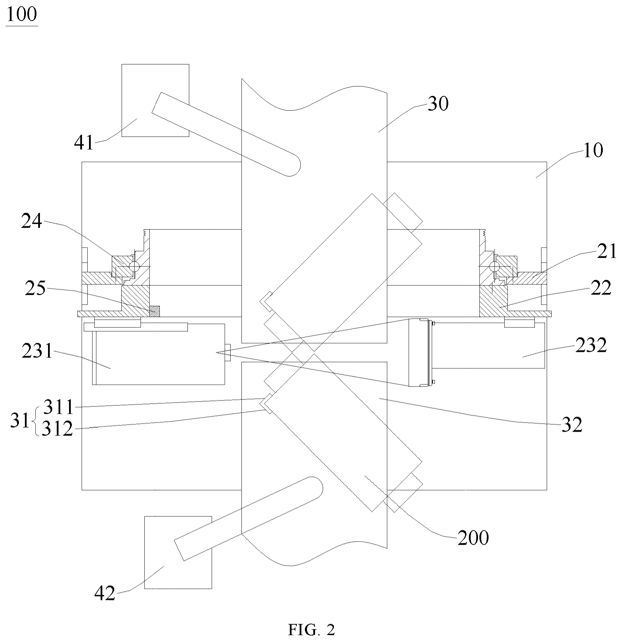

A detection device 100 and a detection method for detecting a battery cell 200 according to the embodiments of the present disclosure will be described below with reference to FIG. 1 and FIG. 2.

As shown in FIG. 1 and FIG 2, the detection device 100 according to the embodiments in the first aspect of the present disclosure includes a supporting mechanism 10, a rotary mechanism 20, a conveying mechanism 30, and a detection mechanism 23.

The rotary mechanism 20 is provided on the supporting mechanism 10, and the rotary mechanism 20 includes a rotary bracket 21 and a rotary disk 22. The rotary bracket 21 is provided on the supporting mechanism 10, and the rotary disk 22 is rotatable circumferentially relative to the rotary bracket 21. The conveying mechanism 30 includes two reciprocating conveyor belts 32 respectively provided on two sides of the rotary disk 22, and the reciprocating conveyor belts 32 are used to carry battery cells 200 to enter or leave the detection region. The detection mechanism 23 is provided on the rotary disk 22, and the detection mechanism 23 includes a radiation source 231 and a detector 232. The radiation source 231 and the detector 232 are used to detect the battery cell 200 on the conveying mechanism 30, and the radiation source 231 and the detector 232 may rotate circumferentially on the rotary disk 22.

Specifically, the rotary mechanism 20 is arranged on the supporting mechanism 10, and the detection mechanism 23 is arranged on the rotary mechanism 20. The detection mechanism 23 may rotate circumferentially on the rotary mechanism 20. The conveying mechanism 30 may respectively convey two battery cells 200 to the detection region, and the two battery cells 200 are respectively located on two sides of the rotary disk 22. When the detection device 100 detects the battery cell 200, the radiation source 231 and the detector 232 of the detection mechanism 23 rotate circumferentially on the rotary disk 22 to detect the battery cells 200 located on two sides of the rotary disk 22 simultaneously, thereby improving the detection efficiency. Through a circumferential rotation on the rotary mechanism 20, the detection mechanism 23 may perform a multi-directional detection on the battery cell 200, so as to detect alignment and welding of pole pieces of each battery cell 200, without requirements for a placement position and a placement angle of the battery cell 200 on the conveying mechanism 30.

The detection device 100 according to the embodiments in the first aspect of the present disclosure may improve the detection quality and the detection efficiency while reducing the placement requirements for the battery cell 200.

Optionally, the detection device 100 further includes a detection control system, which may be configured as follows. The reciprocating conveyor belts on two sides of the detection mechanism 23 respectively move two battery cells 200 to the detection region. If it is detected that the battery cells 200 will not collide with the rotary mechanism 20, the rotary disk 22 is controlled to drive the radiation source 231 and the detector 232 to rotate circumferentially to detect the battery cells 200. The two reciprocating conveying mechanisms 30 move the battery cells 200 out of the detection region.

In some embodiments, the rotary mechanism 20 includes a rotary bracket 21 and a rotary disk 22. The rotary bracket 21 is provided on the supporting mechanism 10. The rotary disk 22 may rotate circumferentially relative to the rotary bracket 21, and the rotary disk 22 is used to fix the radiation source 231 and the detector 232.

Specifically, the rotary mechanism 20 is arranged on the supporting mechanism 10 through the rotary bracket 21. The rotary bracket 21 may support the rotary disk 22, and the rotary disk 22 may rotate circumferentially on the rotary bracket 21. The radiation source 231 and the detector 232 are fixed on the rotary disk 22 and may rotate synchronously with the rotary disk 22. When detecting the battery cell 200, the radiation source 231 and the detector 232 may rotate circumferentially around the battery cell 200 located in the detection region and perform beam scanning on the battery cell 200 in multiple directions.

In this way, through a circumferential rotation of the radiation source 231 and the detector 232 driven by the rotary disk 22, it is possible to perform a multi-directional scanning on the battery cell 200 in the detection region, thereby improving the detection quality of the battery cell 200.

Furthermore, the rotary mechanism 20 further includes a rotary connector 24, which is provided between the rotary bracket 21 and the rotary disk 22 to reduce a resistance between the rotary bracket 21 and the rotary disk 22 so that the rotary disk 22 may rotate freely.

It should be noted that a structure of the rotary connector 24 is not specifically limited here. The rotary connector 24 may be a combination of a circular slide rail and a circular slide block, or a bearing provided between the rotary bracket 21 and the rotary disk 22.

When the rotary connector 24 is a combination of a circular slide rail and a circular slide block, the circular slide rail may be disposed on one of the rotary bracket 21 and the rotary disk 22, and the circular slide block may be disposed on the other of the rotary bracket 21 and the rotary disk 22. The circular slide rail and the circular slide block are engaged with each other, so that the rotary disk 22 may rotate freely on the rotary bracket 21.

Optionally, the rotary mechanism 20 further includes a driving motor, a driving gear and a driven tooth portion. The driving motor is fixed on the rotary bracket 21, the driving gear is disposed on a motor shaft of the driving motor, the driven tooth portion is disposed on an outside of the rotary disk 22, and the driving gear is engaged with the driven tooth portion. Accordingly, the rotary disk 22 may rotate circumferentially under the drive of the driving motor, thereby improving the efficiency of detecting the battery cell 200.

It should be noted that the driven tooth portion may be a full circle of external teeth arranged on the outside of the rotary disk 22, or may be a partial circle of external teeth arranged on the outside of the rotary disk 22. When the driven tooth portion is a full circle of external teeth arranged on the outside of the rotary disk 22, the rotary disk 22 may perform a continuous circumferential rotation under the drive of the driving motor, and when the driven tooth portion is a partial circle of external teeth arranged on the outside of the rotary disk 22, the rotary disk 22 may perform a reciprocating rotation at a particular angle under the drive of the driving motor, which may be selected according to actual needs.

In some embodiments, the conveying mechanism 30 further includes a plurality of positioning modules 31 arranged at intervals, and the positioning modules 31 are used to position the battery cell 200. When battery cells 200 are placed on the conveying mechanism 30, the battery cells 200 may be positioned by the positioning modules 31 so that a measured corner of each battery cell 200 is at a suitable position. When the conveying mechanism 30 moves the battery cell 200 to the detection region, it may be ensured that the detected corner of each battery cell 200 is at the same position, thereby improving the detection accuracy.

Optionally, the positioning module 31 includes a first positioning portion 311 and a second positioning portion 312. The first positioning portion 311 and the second positioning portion 312 are perpendicular to each other, and the first positioning portion 311 and the second positioning portion 312 are both fixed on the conveying mechanism 30. A positioning space is formed inside an angle formed by the first positioning portion 311 and the second positioning portion 312. The corner of the battery cell 200 to be detected may be placed in the positioning space, and two adjacent sides of the battery cell 200 are respectively against the first positioning portion 311 and the second positioning portion 312.

Specifically, when it is required to detect the battery cell 200, the battery cell 200 may be placed on the conveying mechanism 30. One corner of the battery cell 200 may be placed in the positioning space, and two adjacent sides of the corner may be respectively against the first positioning portion 311 and the second positioning portion 312, so that the battery cell 200 may be fixed on the conveying mechanism 30. The battery cells 200 may be placed in sequence in this way to ensure a regular placement of the battery cells 200.

In this way, when the corner of the battery cell 200 is subsequently detected using the detection mechanism 23, the detection may be performed without adjusting the position of the battery cell 200, thereby improving the detection efficiency while ensuring the detection accuracy.

It should be noted that a connection method between the positioning module 31 and the conveying mechanism 30 is not specifically limited here. For example, the positioning module 31 may be connected to the conveying mechanism 30 by bonding, screwing or snapping, which may be selected according to actual needs.

Further optionally, the first positioning portion 311 and the second positioning portion 312 may be grooves or protrusions formed on the conveying mechanism 30. When the battery cell 200 is placed on the conveying mechanism 30, the corner of the battery cell 200 may be placed in the grooves or protrusions, so that the position of the battery cell 200 may be fixed.

Optionally, the positioning module 31 is fixed to the conveying mechanism 30 at a predetermined angle. The predetermined angle is in a range from 0° to 75°.

Exemplarily, the predetermined angle may be 0°, 5°, 10°, 15°, 20°, 25°, 30°, 35°, 40°, 45°, 50°, 55°, 60°, 65°, 70°, or 75°, which may be determined according to actual needs.

It should be noted that the number and location of the positioning modules 31 on the conveying mechanism 30 are not specifically limited here. For example, the positioning modules 31 may be arranged at intervals on a center line of the conveying mechanism 30. The positioning modules 31 may also be arranged side by side on two sides of the center line of the conveying mechanism 30, which may be selected according to actual needs.

It may be understood that, depending on different arrangements of the positioning modules 31, the battery cells 200 may be placed on the conveying mechanism 30 in different ways.

When the positioning modules 31 are arranged and evenly spaced on the center line of the conveying mechanism 30, in order to ensure the quality of the detection mechanism 23 detecting the battery cell 200, the positioning modules 31 may be arranged at a predetermined angle so that the detection mechanism 23 may detect corners of the battery cells 200. By placing the corners of the battery cells 200 in the positioning space so that adjacent sides of the corner are against the first positioning portion 311 and the second positioning portion 312 respectively, it is possible to place a plurality of battery cells 200 at equal distances on the conveying mechanism 30. As shown in FIG. 2, for example, if the predetermined angle of the positioning module 31 is set to 45°, the battery cell 200 is also tilted at 45° on the conveying mechanism 30. When the conveying mechanism 30 conveys the battery cell 200 to the detection region, the detection mechanism 23 may perform a circumferential detection on the corners of the battery cell 200, thereby improving the detection accuracy.

In some embodiments, the rotary mechanism 20 further includes a position sensor 25, which may detect the position of the battery cell 200 on the conveying mechanism 30. Through the position sensor 25, it is possible to detect the position of the battery cell 200 on the conveying mechanism 30. The position sensor 25 is in signal connection with the rotary mechanism 20. The position sensor 25 may perform detection before the conveying mechanism 30 conveys the battery cell 200 to enter the detection region. When detecting that the position of the battery cell 200 is about to interfere with the detection mechanism 23, the position sensor 25 may send an avoidance signal to the rotary mechanism 20, so that the rotary disk 22 drives the radiation source 231 and the detector 232 to stop a circumferential rotation and avoid the battery cell 200. When the position sensor 25 detects that the position of the battery cell 200 may not interfere with the detection mechanism 23 or no battery cell 200 is detected, the rotary disk 22 drives the radiation source 231 and the detector 232 to continue the circumferential rotation.

In this way, when detecting the battery cell 200, it is possible to avoid a collision of the battery cell 200 and the detection mechanism 23, thereby improving the detection safety.

It should be noted that a type of the position sensor 25 is not specifically limited here. For example, the position sensor 25 may be an optical position sensor 25, an ultrasonic position sensor 25, a light curtain sensor, or a camera.

When the position sensor 25 is an optical position sensor 25, a light beam is emitted through a transmitter. If the battery cell 200 located on the conveying mechanism 30 is about to interfere with the rotary mechanism 20, the light beam emitted by the transmitter may be reflected back to the optical position sensor 25 when reaching the battery cell 200. Then, the sensor may calculate a distance between the rotary mechanism 20 and the battery cell 200. When the distance between the two is less than a predetermined threshold, the optical position sensor 25 sends an avoidance signal to the rotary mechanism 20, and the rotary disk 22 drives the radiation source 231 and the detector 232 to stop the circumferential rotation and avoid the battery cell 200. When the optical position sensor 25 receives no reflected signal, or it is calculated after receiving the signal that the distance between the battery cell 200 and the rotary mechanism 20 is greater than or equal to the predetermined threshold, the rotary disk 22 may drive the radiation source 231 and the detector 232 to continue the circumferential rotation.

When the position sensor 25 is a light curtain sensor, the light curtain sensor may be provided upstream of the rotary mechanism 20 and near the conveying mechanism 30. When the light curtain sensor detects that a light curtain is blocked, the light curtain sensor sends an avoidance signal to the rotary mechanism 20, so that the rotary disk 20 drives the radiation source 231 and the detector 232 to stop the circumferential rotation and avoid the battery cell 200. When the light curtain sensor detects that the light curtain is not blocked, the rotary disk 22 may drive the radiation source 231 and the detector 232 to continue the circumferential rotation.

When the position sensor 25 is a camera, the camera may be provided on the rotary bracket 21. The camera may photograph the battery cell 200 located on the conveying mechanism 30. By identifying a position of the battery cell 200 in an image, it may be determined whether the battery cell 200 is about to interfere with the rotary mechanism 20. When it is calculated from the image taken by the camera that the battery cell 200 is about to collide with the rotary mechanism 20, the camera may send an avoidance signal to the rotary mechanism 20, so that the rotary disk 22 drives the radiation source 231 and the detector 232 to stop the circumferential rotation and avoid the battery cell 200. When the battery cell 200 does not appear in the image taken by the camera or it is calculated from the image taken by the camera that the battery cell 200 will not collide with the rotary mechanism 20, the camera may send a signal to the rotary disk 22, so that the rotary disk 22 drives the radiation source 231 and the detector 232 to continue the circumferential rotation.

It should be noted that the position of the position sensor 25 on the detection device 100 is not specifically limited here and may be determined as needed, as long as the position sensor 25 may detect whether the battery cell 200 is about to collide with the rotary mechanism 20.

In some embodiments, the detection mechanism 23 further includes a selection mechanism 40, which includes a first selection module 41 and a second selection module 42. The first selection module 41 is used to place the undetected battery cell 200 on the reciprocating conveyor belt 32, and the second selection module 42 is used to transfer the battery cell 200 to a waste region when the detection mechanism 23 detects that the battery cell 200 is unqualified.

Specifically, the second selection module 42 is adapted to transfer the unqualified battery cell 200 to the waste region when the detection mechanism 23 detects that the battery cell 200 is unqualified. After the detection mechanism 23 completes the detection of the battery cell 200, if a battery cell 200 with an internal defect fails to meet the requirements, the second selection module 42 may select out the unqualified battery cell 200 on the conveying mechanism 30 and transfer the unqualified battery cell 200 to the waste region, so that a qualified battery cell 200 may enter a next process. In this way, the detection efficiency of the detection device 100 may be improved.

It may be understood that a detection system corresponding to the detection device 100 in the present disclosure may number the battery cells 200 detected by the detection device 100 one by one. When the second selection module 42 transfers the unqualified battery cell 200 to the waste region, the detection system may eliminate the number and image corresponding to the unqualified battery cell 200.

That is to say, the battery cell 200 is firstly detected by the detection mechanism 23 while being conveyed by the conveying mechanism 30. If the detection mechanism 23 detects that the battery cell 200 is unqualified, the second selection module 42 transfers the battery cell 200 to the waste region. At the same time, in the detection system, the number and image corresponding to the unqualified battery cell 200 are eliminated. When the battery cell 200 passes the detection of the detection mechanism 23 and is determined to be qualified, the qualified battery cell 200 may enter the next process. In this way, a system resource occupancy rate may be reduced, and the detection device 100 may have a higher detection efficiency.

Therefore, by providing the first selection module 41 and the second selection module 42, it is possible to further improve the detection efficiency of the detection device 100.

According to the embodiments in a second aspect of the present disclosure, a detection method for detecting the battery cell 200 is provided. The detection method is applicable to the detection device 100 of any one of the above-mentioned embodiments. The detection method includes: placing the battery cell 200 on the conveying mechanism 30; conveying the battery cell 200 by the conveying mechanism 30; and detecting the battery cell 200 by the detection mechanism 23.

In some embodiments, when placing the battery cell 200 on the conveying mechanism 30, the battery cell 200 is placed at a predetermined angle, which is in a range from 15° to 75°.

Specifically, by placing the battery cell 200 at the predetermined angle, a center line of the battery cell 200 may have a particular angle with an extension direction of the conveying mechanism 30, that is, the battery cell 200 is placed on the conveying mechanism 30 obliquely, so that when the conveying mechanism 30 moves the battery cell 200 to the detection region, the corners of the battery cell 200 may be located in the detection region.

In this way, it is possible to improve the detection efficiency of the detection device 100 while improving the detection effect.

Exemplarily, the predetermined angle may be 15°, 20°, 25°, 30°, 35°, 40°, 45°, 50°, 55°, 60°, 65°, 70°, or 75°, which may be set according to actual needs.

As shown in FIG. 2, the detection method for detecting the battery cell 200 is described below according to specific embodiments of the present disclosure.

The battery cell 200 is placed on the conveying mechanism 30, and the battery cell 200 is placed at a predetermined angle.

The rotary disk 22 drives the radiation source 231 and the detector 232 to rotate circumferentially. At this time, the conveying mechanism 30 extends parallel to a rotation axis of the detection mechanism 23, and the conveying mechanism 30 conveys the battery cell 200.

The reciprocating conveying mechanisms 30 on two sides of the detection mechanism 23 respectively move two battery cells 200 to the detection region.

The position sensor 25 detects the position of the battery cell 200, and sends a signal to the rotary mechanism 20 if it is detected that the battery cell 200 will not collide with the rotary mechanism 20.

After receiving the signal from the position sensor 25, the rotary mechanism 20 controls the rotary disk 22 to drive the radiation source 231 and the detector 232 to rotate circumferentially to detect the battery cell 200.

Two reciprocating conveying mechanisms 30 move the battery cells 200 out of the detection region.

The selection mechanism 40 transfers the unqualified battery cell 200 to the waste region.

In the description of this specification, the description with reference to the terms "embodiment", "example", etc. means that a specific feature, structure, material or characteristic described in conjunction with that embodiment or example is contained in at least one embodiment or example of the present disclosure. In this specification, the schematic expressions of the above terms do not necessarily refer to the same embodiment or example. Furthermore, the specific features, structures, materials or characteristics described may be combined in any suitable manner in any one or more embodiments or examples.

Although the embodiments of the present disclosure have been shown and described, it will be appreciated by those skilled in the art that various changes, modifications, substitutions and variations may be made to the embodiments without departing from the principles and spirit of the present disclosure, and that the scope of the present disclosure is defined by the claims and their equivalents.

## Claims

1. A detection device, comprising:
a supporting mechanism (10);
a rotary mechanism (20) provided on the supporting mechanism (10), wherein the rotary mechanism (20) comprises a rotary bracket (21) provided on the supporting mechanism (10) and a rotary disk (22) rotatable circumferentially relative to the rotary bracket (21);
a conveying mechanism (30) comprising two reciprocating conveyor belts (32) respectively provided on two sides of the rotary disk (22), wherein the reciprocating conveyor belts (32) are configured to carry battery cells (200) to enter or leave a detection region; and
a detection mechanism (23) provided on the rotary disk (22), wherein the detection mechanism (23) comprises a radiation source (231) and a detector (232), the radiation source (231) and the detector (232) are configured to detect the battery cells (200) on the conveying mechanism (30), and the radiation source (231) and the detector (232) are rotatable circumferentially on the rotary disk (22).

2. The detection device according to claim 1, wherein the conveying mechanism (30) further comprises a plurality of positioning modules (31) arranged at intervals, and the positioning modules (31) are configured to position the battery cells (200).

3. The detection device according to claim 1, wherein the rotary mechanism (20) further comprises a position sensor (25) configured to detect a position of the battery cell (200) on the conveying mechanism (30).

4. The detection device according to claim 1, further comprising a selection mechanism (40), wherein the selection mechanism (40) comprises a first selection module (41) configured to place an undetected battery cell (200) on the reciprocating conveyor belt (32).

5. The detection device according to claim 4, wherein the selection mechanism (40) further comprises a second selection module (42) configured to transfer the battery cell (200) to a waste region when the detection mechanism (23) detects that the battery cell (200) is unqualified.

6. A detection method for detecting a battery cell, applicable to the detection device of any one of claims 1 to 5, the detection method comprising:
placing a battery cell (200) on a conveying mechanism (30);
conveying the battery cell (200) to a detection region by using the conveying mechanism (30); and
detecting the battery cell (200) by using a detection mechanism (23).

7. The detection method according to claim 6, wherein the battery cell (200) is placed at a predetermined angle when being placed on the conveying mechanism (30), and the predetermined angle is in a range from 15° to 75°.

8. The detection method according to claim 7, further comprising: before detecting the battery cell (200) by using the detection mechanism (23),
driving, by using a rotary disk (22), the radiation source (231) and the detector (232) to rotate circumferentially;
moving two battery cells (200) to the detection region respectively by using reciprocating conveyor belts (32) on two sides of the detection mechanism (23);
driving, by using the rotary disk (22), the radiation source (231) and the detector (232) to rotate circumferentially to detect the battery cell (200); and
moving the battery cells (200) out of the detection region by using the two reciprocating conveyor belts (30).

9. The detection method according to claim 8, further comprising:
transferring an unqualified battery cell (200) to a waste region by using a selection mechanism (40).
